# EUROPEAN PATENT APPLICATION

(11) **EP 1 739 238 A1**
(43) Date of publication of application: **03.01.2007**
(21) Application number: 06115752.5
(22) Date of filing: 20.06.2006
(51) Int. Cl.: E02F 5/10

(54) **Trenching machine**

(30) Priority: 29.06.2005 GB 0513152
(71) Applicant: Shelton, David Brian, LN9 5NF Lincolnshire Horncastle (GB)
(72) Inventor: Shelton, David Brian, LN9 5NF Lincolnshire Horncastle (GB)
(74) Representative: Loven, Keith James

(57) **Abstract**

A trenching machine comprises a supporting body carrying attachment means for attachment to a towing vehicle, the supporting body (1, 3, 4) mounting an auger (7) with its axis of rotation lying in a vertical plane extending in the direction of motion of the machine and making an acute angle with the vertical so that the lower end of the auger is in front of the upper end of the auger relative to the direction of motion of the machine. The auger is mounted on the body so as to be movable along its axis of rotation between a working position, in which the auger extends below the supporting body, and a rest position, in which the lower end of the auger is above the lowermost part of the supporting body. Ground-engaging pads (2) are provided on the supporting body to the sides of the auger relative to the direction of motion of the machine. The supporting body also mounting rotary drive means (8) to rotate the auger (7) and linear drive means to move the auger between the rest position and the working position thereof. A support bearing for the auger is spaced vertically above the lower end of the auger.

## Description

### Field of the Invention

This invention relates to a trenching machine, for example for use in digging drainage trenches in agriculture or civil engineering.

### Background to the Invention

Conventionally, most trenching machines have been based on an endless chain carrying digging and lifting elements to dig out soil from a trench and lift it clear for disposal. A significant disadvantage of this type of machine is that the chain involves a large number of bearings, at least one being required at each link in the chain connecting one digging element to the next. These bearings are continuously exposed to abrasive particulate materials such as soil and sand, usually in the presence of water, with the result that they are subject to a high degree of wear. The cost of maintaining trenching machines is therefore very high, in terms of both the regular replacement of parts and the labour and downtime involved.

An alternative configuration of trenching machine uses in place of the endless chain an auger to cut and lift the soil. This has the advantage of only requiring one bearing in contact with the soil, at the lower end of the auger. In order to ensure that the bearing moves through soil which has already been loosened and lifted by the auger, it is necessary to arrange the auger to lean forward (i.e. with the upper end of the auger ahead of the lower end) relative to the direction of travel of the machine, so that the bottom bearing is above the floor of trench. While this arrangement is satisfactory in some applications, it has been found that there is a tendency for the auger to lift out of the soil, which may require a positive downward force on the auger to counteract. Also, the machines of this type may have difficulty in handling heavier, stony, soils, in some cases being unable to cut trenches through such materials.

### Summary of the Invention

According to the invention there is provided a trenching machine comprising a supporting body carrying attachment means for attachment to a towing vehicle, the supporting body mounting an auger with its axis of rotation lying in a vertical plane extending in the direction of motion of the machine and making an acute angle with the vertical so that the lower end of the auger is in front of the upper end of the auger relative to the direction of motion of the machine, the auger being mounted on the body so as to be movable along its axis of rotation between a working position, in which the auger extends below the supporting body, and a rest position, in which the lower end of the auger is above the lower most part of the supporting body, ground-engaging pads being provided on the supporting body to the sides of the auger relative to the direction of motion of the machine, the supporting body also mounting rotary drive means to rotate the auger and linear drive means to move the auger between the rest position and the working position thereof, a support bearing for the auger being spaced vertically above the lower end of the auger.

Preferably, the auger is arranged so that the axis of rotation thereof makes an angle of less than 30 degrees with the vertical, more preferably approximately 23 degrees.

The support bearing for the auger is preferably located at approximately 100mm from the end of the auger, and suitably consists of a bearing metal sleeve located around and secured to a central shaft for the auger and a bearing metal shell in a tubular support member surrounding the sleeve, the support member being carried on an arm extending from an auger carrier extending parallel to the auger substantially over the length thereof.

The auger carrier is preferably mounted on a carriage which is slidably mounted on the supporting body.

The augur suitably comprises a spiral mounted on a central shaft. The spiral is preferably removably mounted on the shaft, and may comprise a plurality of short segments so that, in the event of damage to the auger, a damaged segment may be replaced without the need to replace the whole auger.

The rotary drive means for the auger preferably consists of a hydraulic motor mounted on the end of the auger and connected to a pressurised hydraulic fluid supply by means of flexible hoses. The pressurised hydraulic fluid may be supplied from the towing vehicle, or from a hydraulic pump driven by a mechanical drive from the towing vehicle, for example the power take-off drive of an agricultural tractor vehicle.

The ground-engaging pads may comprise a skid having an opening therethrough, through which the auger extends downwardly, in use. The skid would thus engage the ground on each lateral side of the trench being cut, as well as the ground ahead of the auger in the direction of motion of the machine. It has been found that this arrangement stabilises the trench sides during the trenching action, because the tendency of the auger to dig itself into the ground is resisted by the skid, in turn pressing the skid into close contact with the soil. As a result, a very clean and stable trench is achieved.

The supporting body may also carry means for handling the soil removed from the trench, for example directing the soil sideways on to the ground alongside the skid, or on to a mechanical conveyor to lift the soil a further distance from the trench, or even into a receiver running alongside the machine, either towed by the same towing vehicle or independent thereof.

### Brief Description of the Drawings

In the drawings, which illustrate an exemplary embodiment of the invention:

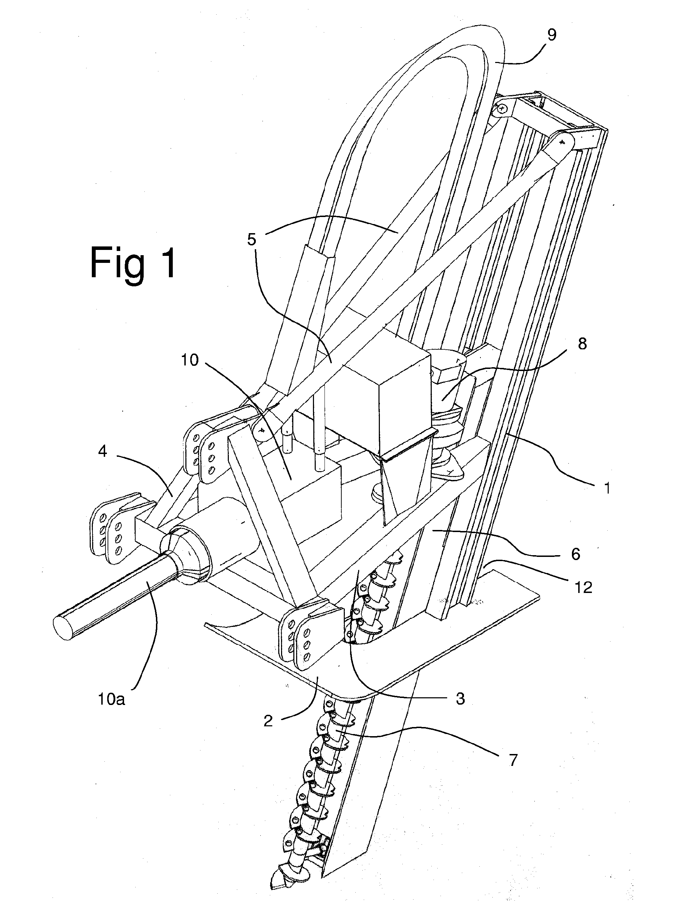

Figure 1 is a perspective view of the trenching machine;
Figure 2 Is an enlarged perspective detail view of the lower end of the auger, showing the bearing support;
Figure 3 is an exploded perspective view corresponding to that of Figure 2, showing the removable mounting of the flight elements of the auger; and
Figure 4 is an enlarged perspective detail view of the slide mounting for the auger support.

### Detailed Description of the Illustrated Embodiment

The trenching machine comprises a supporting framework having a generally rectangular frame 1 extending upwardly from a ground-engaging skid 2 at an angle of approximately 30 degrees to the vertical, and support arms 3 extending forward from the frame 1. The arms 3 carry a triangular attachment frame 4 for attachment to the three-point hitch lift conventionally provided to the rear of an agricultural tractor. Additional supporting link arms 5 extend between the upper point of the triangular frame 4 and the upper end of the rectangular frame 1.

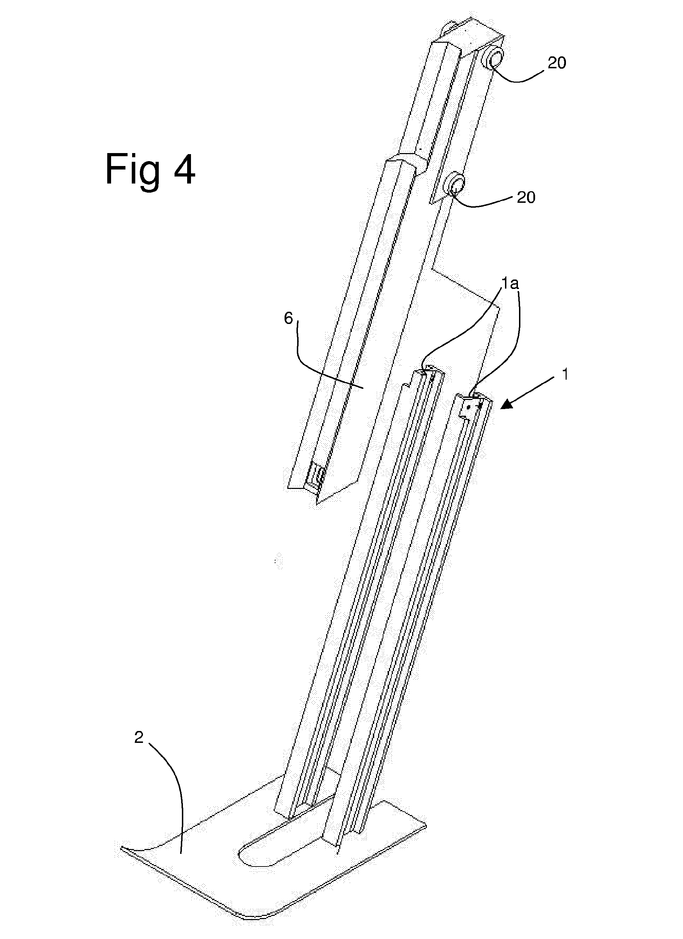

A carriage 6 is slidably mounted on the rectangular frame 1 as illustrated in, and described hereinafter with reference to, Figure 4, with a hydraulic cylinder to drive the carriage 6 relative to the frame 1. The carriage 6 in turn supports an elongate auger 7 having a hydraulic drive motor 8 at the upper end thereof. The drive motor 8 is supplied with pressurised hydraulic fluid via flexible supply pipes 9 from a pump 10 driven via a universal joint by a drive shaft 10a connectable to the tractor's power take-off shaft (PTO). The pump 10, and associated hydraulic fluid tanks 11, are mounted between the support arms 3.

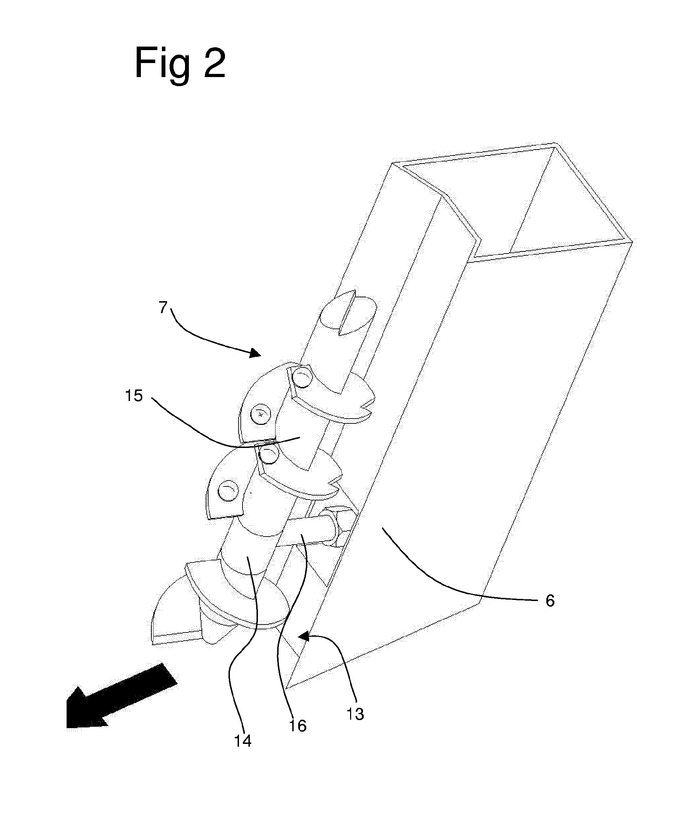

The skid 2 has a longitudinal slot 12 therein opening rearwardly, through which the auger 7 passes to cut a trench, as described hereinafter. The skid thus constitutes ground-engaging pads engaging the ground on either side of the trench, and in front of it. A hopper 13 (Figure 2) is defined by steel plates extending upwardly from the skid 2 and surrounding the part of the slot 12 through which the auger extends, receiving and deflecting the soil lifted by the auger from the trench on to a chute or conveyor (not shown) mounted to one side of the machine, and serving to deposit the soil at a desired distance from the machine as it moves forward cutting the trench.

Figure 2 shows the mouth of the hopper 13 with the auger fully raised to show the lower support for the auger. This consist of a plain metal bearing 14 surrounding the shaft 15 of the auger 7 and carried by a bar 16 extending from the carriage 6. The bearing 14 is located at a distance of approximately 100mm from the lower end of the auger, to ensure that it is clear of the base of the trench at all times.

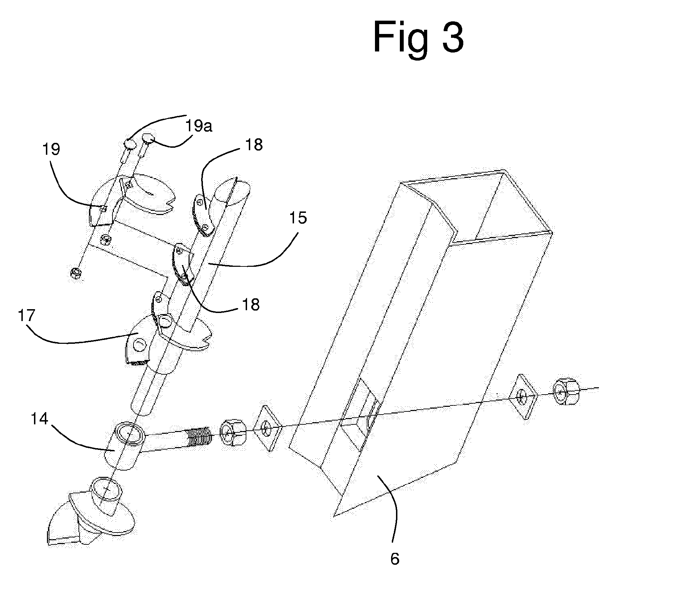

Figure 3 illustrates the mounting of relatively short sections 17 of the auger flight on attachment lugs 18 welded to the shaft 15 of the auger. The combination of the lugs 18 and the sections 17 provides a substantially continuous spiral flight, but also affords the possibility of easily replacing broken or damaged sections of the flight with the minimum of downtime of the trenching machine, increasing its effectiveness and decreasing running costs significantly. The sections 17 are simply bolted on to the lugs via fixing holes 19 and bolts 19a

Figure 4 shows the upper end of the rectangular frame 1 with the carriage 6 mounted therein and at its uppermost position, i.e. with the auger raised fully. The frame 1 is formed from channel section members 1a, while the carriage 6 has wheels 20 which are located to roll in the opposed channels of the members 1a. A hydraulic ram (not shown) extends between the frame 1 and the carriage 6 and is also supplied with hydraulic fluid from the pump 10. Extension of the ram causes the auger to be lowered to the desired depth for trench cutting, while retraction of the ram serves to lift the auger out of the trench at completion of the work.

In use, the operation will typically be commenced from an existing drainage ditch or other suitable excavation. The auger will be lowered by the ram to the desired trench depth in the ditch or excavation, and then rotated by the motor 8 while the machine is moved forward by the tractor. The rotation of the auger 7 tends to pull the auger downwardly into the trench. This motion is resisted by the skid bearing against the surface surrounding the trench to the front and sides, and the resultant downward pressure ensures that the sides of the trench are held firmly in place, in turn providing a very clean, stable trench structure, while also maintaining trench depth without the need for downward force on the auger and its carriage. The ram therefore serves merely to control lowering of the auger, and to lift it from the trench after use.

The frame 1 may be adapted to mount means for guiding a flexible pipe or cable into the trench to the rear of the trenching machine as it advances. Means may be associated with the guiding means for use in backfilling the trench after introduction of the pipe or cable, for example including a hopper for directing backfilling material into the trench.

## Claims

1. A trenching machine comprising a supporting body carrying attachment means for attachment to a towing vehicle, the supporting body mounting an auger with its axis of rotation lying in a vertical plane extending in the direction of motion of the machine and making an acute angle with the vertical so that the lower end of the auger is in front of the upper end of the auger relative to the direction of motion of the machine, the auger being mounted on the body so as to be movable along its axis of rotation between a working position, in which the auger extends below the supporting body, and a rest position, in which the lower end of the auger is above the lower most part of the supporting body, ground-engaging pads being provided on the supporting body to the sides of the auger relative to the direction of motion of the machine, the supporting body also mounting rotary drive means to rotate the auger and linear drive means to move the auger between the rest position and the working position thereof, a support bearing for the auger being spaced vertically above the lower end of the auger.

2. A trenching machine according to Claim 1, wherein the auger is arranged so that the axis of rotation thereof makes an angle of less than 30 degrees with the vertical.

3. A trenching machine according to Claim 2, wherein the said angle is approximately 23 degrees.

4. A trenching machine according to Claim 1, 2 or 3, wherein the support bearing for the auger is located at approximately 100mm from the end of the auger.

5. A trenching machine according to any preceding claim, wherein the support bearing for the auger consists of a bearing metal sleeve located around and secured to a central shaft for the auger and a bearing metal shell in a tubular support member surrounding the sleeve, the support member being carried on an arm extending from an auger carrier extending parallel to the auger substantially over the length thereof.

6. A trenching machine according to Claim 5, wherein the auger carrier is mounted on a carriage which is slidably mounted on the supporting body.

7. A trenching machine according to any preceding claim, wherein the auger comprises a central shaft to which segments of the augur spiral are attachable.

8. A trenching machine according to Claim 7, wherein the central shaft has lugs attached thereto, to which the segments are secured.

9. A trenching machine according to Claim 8, wherein the lugs are welded to the shaft.

10. A trenching machine according to Claim 8 or 9, wherein the segments are secured to the lugs by means of bolts or screws.
